# EUROPÄISCHE PATENTSCHRIFT

(11) **EP 3 696 326 B1**
(45) Veröffentlichungstag und Bekanntmachung des Hinweises auf die Patenterteilung: **17.11.2021**
(21) Anmeldenummer: 20154363.4
(22) Anmeldetag: 29.01.2020
(51) Int. Cl.: E02B 17/00, H02G 1/10, H02G 3/22, E02B 17/02

(54) **GRÜNDUNG EINES OFFSHORE-BAUWERKS MIT SEEKABELDURCHFÜHRUNG**
FOUNDATION OF AN OFFSHORE STRUCTURE WITH SUBMARINE CABLE DUCT
FONDATION D'UNE CONSTRUCTION EN MER POURVUE DE PASSE-CÂBLE SOUS-MARIN

(30) Priorität: 15.02.2019 DE 102019103925
(43) Veröffentlichungstag der Anmeldung: 19.08.2020
(73) Patentinhaber: RWE Renewables GmbH, 45145 Essen (DE)
(72) Erfinder: Bartminn, Daniel, 25335 Elmshorn (DE); Matlock, Benjamin, 20259 Hamburg (DE)
(74) Vertreter: Cohausz & Florack

(56) Entgegenhaltungen:
- EP-A1- 1 985 845
- US-A- 4 519 725
- US-A- 4 519 726

## Beschreibung

Die Erfindung betrifft eine Gründung eines Offshore-Bauwerks, insbesondere einer Offshore-Windkraftanlage, mit wenigstens einem Gründungspfahl, wobei der Gründungspfahl eine Seekabeldurchführung zum Durchführen eines Seekabels aufweist.

Zur Gründung von Offshore-Bauwerken, wie insbesondere Windkraftanlagen, sind unterschiedliche Varianten bekannt. Für Wassertiefen etwa zwischen 4 m und 50 m haben sich insbesondere sogenannte Monopiles, also einzelne Gründungspfähle, als eine wirtschaftliche Lösung herausgestellt. Bei diesem Fundamenttyp handelt es sich meist um einen Gründungspfahl in Form eines Stahlrohrs mit einem Durchmesser von mehreren Metern, der mit seinem offenen Ende in den Meeresboden gerammt oder über ein Vibrationsverfahren in den Meeresboden eingeführt wird. Um eine ausreichende Stabilität des Gründungspfahls zu gewährleisten, der das Bauerwerk, insbesondere die Windkraftanlage, trägt, wird der Gründungspfahl meist wenigstens etwa mit seiner halben Länge in den Meeresboden getrieben. Dies ist jedoch nur in sandigen, lehmigen oder schluffigen Böden mit vertretbarem Aufwand möglich.

Alternativ zu den Monopile-Gründungen kommen beispielsweise auch sogenannte Tripod-Gründungen zum Einsatz, die nach dem unter Wasser liegenden "Dreifuß" benannt sind. Diese Struktur wird durch mehrere Gründugspfähle im Meeresboden verankert, die durch die hülsenförmigen Füße des Tripods gerammt werden. Des Weiteren sind insbesondere noch Tripiles bekannt, die ebenfalls mittels drei Gründugspfählen im Meeresboden verankert werden, welche ein Stützkreuz zum Tragen des Bauwerks aufweisen. Bei sogenannten Jackets wird ein Gerüst auf vier Gründungspfähle aufgesetzt, die im Meeresboden verankert werden. Weiterhin kommen auch Schwergewichtsgründungen mit Schwergewichtsfundamenten aus Beton in Frage.

Offshore-Bauwerke, wie insbesondere Offshore-Windkraftanlagen, werden häufig mit einem Seekabel, insbesondere Seestromkabel, weiter insbesondere Hochspannungs- oder Mittelspannungskabel, angeschlossen, das teilweise auf dem Meeresboden aufliegt und durch wenigstens einen Gründungspfahl in das Offshore-Bauwerk geführt werden muss. Mithin weisen die entsprechenden Gründungspfähle Seekabeldurchführungen zum Durchführen des Seekabels auf.

Da die Seekabel außerhalb der Gründungspfähle der Meeresströmung und anderen Kräften ausgesetzt sind, kommt es immer wieder zu Beschädigungen der Seekabel im Bereich der Seekabeldurchführungen. Hierbei ist insbesondere auch zu berücksichtigen, dass sich der Meeresboden nach der Installation der Gründung stark verändern kann. So kann es beispielsweise durch eine beschleunigte Meeresströmung im Bereich der Gründung zu sogenannten Kolks kommen, bei denen es sich um Vertiefungen im Meeresboden infolge abgetragenen Sediments handelt. Der Meeresboden kann aber auch aus anderen Gründen in Bewegung sein. So tragen beispielsweise unterseeische Wanderdünen in vielen Meeresregionen zu diesen Veränderungen bei. Im Ergebnis kann sich die Höhe des Meeresbodens im Bereich einer Gründung eines Offshore-Bauwerks um viele Meter verändern, was zu einer Beschädigung des Seekabels im Bereich der Seekabeldurchführung führen kann, wenn durch die größere frei hängende Kabellänge das Schwingungsverhalten des Kabels nachteilig beeinflusst wird.

Zur Vermeidung dieses Problems ist bereits vorgeschlagen worden, die Seekabeldurchführung in einem Bereich zwischen 3,5 m und 5 m oberhalb des Meeresbodens vorzusehen. Zudem sind besondere Seekabeldurchführungen vorgeschlagen worden, etwa in der EP 1 985 845 A1 welche Beschädigungen der Seekabel vermeiden sollen. Auch diese Verbesserungen haben das bestehende Problem jedoch noch nicht zufriedenstellend gelöst.

Daher liegt der vorliegenden Erfindung die Aufgabe zugrunde, die Gründung der eingangs genannten und zuvor näher erläuterten Art derart auszugestalten und weiterzubilden, dass Beschädigungen von Seekabeln im Bereich der Seekabeldurchführungen weiter verhindert werden können.

Diese Aufgabe ist bei einer Gründung nach dem Oberbegriff von Anspruch 1 dadurch gelöst, dass die Seekabeldurchführung wenigstens einen im Gründungspfahl vorgesehenen und sich wenigstens überwiegend parallel zur Längsachse des Gründungspfahls erstreckenden Durchführungsschlitz aufweist und dass die Seekabeldurchführung wenigstens zwischen wenigstens einer oberen Stellung zum Durchführen des Seekabels durch einen oberen Abschnitt des Durchführungsschlitzes in wenigstens eine untere Stellung zum Durchführen des Seekabels durch einen unteren Abschnitt des Durchführungsschlitzes verstellbar vorgesehen ist.

Die Bereitstellung eines Durchführungsschlitzes im Gründungspfahl erlaubt eine Durchführung des Seekabels nicht nur in einer vorbestimmten Höhe bezogen auf den Gründungspfahl bzw. auf den Meeresboden. Vielmehr kann durch den Durchführungsschlitz das Seekabel auf wenigstens zwei unterschiedlichen Höhen entlang des Gründungspfahls in den Gründungspfahl eingeführt werden. Zu diesem Zweck muss sich der Durchführungsschlitz wenigstens auch in einer Richtung parallel zur Längssachse des Gründungspfahls erstrecken. Da eine Variation der Durchführung des Seekabels in der Umfangsrichtung des Gründungspfahls nicht oder jedenfalls weniger bedeutend ist als die Variation der Durchführung in der Längsrichtung des Gründungspfahls, erstreckt sich der Durchführungsschlitz wenigstens überwiegend parallel zur Längsachse des Gründungspfahls. Anders ausgedrückt, kann sich der Durchführungsschlitz wenigstens überwiegend in der Schwerkraftrichtung erstrecken. Der Durchführungsschlitz erstreckt sich also mehr in der Längsrichtung als in der Umfangsrichtung des Gründungspfahls. Vereinfacht gesprochen kann dies auch so verstanden werden, dass sich der Durchführungsschlitz entlang seiner Breite in einer Richtung erstreckt, die mit der Längsachse des Gründungspfahls einen Winkel von weniger als 45° einschließt.

Dabei ist die Seekabeldurchführung verstellbar gegenüber dem Durchführungsschlitz vorgesehen, so dass die Seekabeldurchführung die Durchführung des Seekabels in wenigstens zwei unterschiedlichen Stellungen ermöglichen kann. Um auf diese Weise eine Höhenvariation der Durchführung des Seekabels zu ermöglichen, ist die Seekabeldurchführung wenigstens zwischen wenigstens einer oberen Stellung, in der das Seekabel durch einen oberen Abschnitt des Durchführungsschlitzes in den Gründungspfahl ein- bzw. austritt, und wenigstens einer unteren Stellung, in der das Seekabel durch einen unteren Abschnitt des Durchführungsschlitzes hindurchgeführt wird, verstellbar.

Diese Verstellbarkeit kann dabei nur in einer Richtung möglich sein. Hierbei kann es dann besonders bevorzugt sein, wenn die Verstellung der Seekabeldurchführung entlang des Durchführungsschlitzes von oben nach unten erfolgt. In vielen Fällen wird der Meeresboden nach der Gründung des Gründungspfahls nämlich absinken. Sollte dagegen zu erwarten sein, dass sich der Meeresboden nach der Gründung anhebt, so kann es bevorzugt sein, wenn die Verstellung der Seekabeldurchführung entlang des Durchführungsschlitzes von unten nach oben erfolgt. Unabhängig davon wird es jedoch in den meisten Fällen besonders bevorzugt sein, wenn die Verstellung der Seekabeldurchführung sowohl nach oben als auch nach unten bezogen auf die Längsachse des Gründungspfahls, insbesondere auch hin und her, also rauf und runter, erfolgen kann. Ein Anheben des Meeresbodens kann zu einem Vergraben des Seekabels und evtl. zusätzlich auch wenigstens teilweise der Seekabeldurchführung führen. Da das Seekabel auf diese Weise fixiert wird, ist die Gefahr von Beschädigungen des Seekabels in vielen Fällen geringer als bei einem Absenken des Meeresbodens, so dass auf ein Verstellen der Seekabeldurchführung von unten nach oben bedarfsweise verzichtet werden kann.

In diesem Zusammenhang versteht es sich, dass es besonders bevorzugt sein wird, wenn die Durchführung des Seekabels durch die Seekabeldurchführung nicht nur in zwei unterschiedlichen Positionen entlang des Durchführungsschlitzes ermöglicht wird, sondern in noch weiteren Positionen. Beispielsweise sind insgesamt drei, vier oder noch mehr Positionen denkbar. Es kommt auch eine wenigstens im Wesentlichen stufenlose Verstellung der Seekabeldurchführung in Frage. Je mehr Positionen vorgesehen sind, desto flexibler kann auf eine Veränderung des Meeresbodens reagiert werden. Allerdings könnte sich eine solche, höhere Flexibilität nachteilig auf den apparativen Aufwand für die Seekabeldurchführung auswirken.

Die Gründung kann ganz grundsätzlich eine Monopile-Gründung sein, bei der der Gründungspfahl der einzige Gründungspfahl des Offshore-Bauwerks ist. Es kann sich aber beispielsweise auch um eine Tripod-Gründung oder eine Jacket-Gründung handeln, die mehrere Gründungspfähle umfasst, von denen wenigstens ein Gründungspfahl eine entsprechende Seekabeldurchführung aufweist. Im Falle einer Schwergewichtsgründung ist diese bevorzugt mit einem einzigen Gründungspfahl versehen, der eine entsprechende Seekabeldurchführung aufweist. Es kommt also vorliegend eher untergeordnet auf die Art der Gründung an. Auch kommt es eher untergeordnet auf die Art des Offshore-Bauwerks an, obschon die Verstellung der Seekabeldurchführung insbesondere im Zusammenhang mit der Gründung von Offshore-Windkraftanlagen besonders zweckmäßig ist.

Die Längsachse des Gründungspfahls ist dabei vorliegend nicht so zu verstehen, als dass der Gründungspfahl zwingend rohrförmig ausgebildet sein müsste. Auf die Form des Gründungspfahls kommt es tatsächlich nicht besonders an, auch wenn rohrförmige Gründungspfähle aus Stabilitätsgründen grundsätzlich bevorzugt sind. Diese können aber beispielsweise auch einen ovalen oder einen eckigen Querschnitt aufweisen. Jedenfalls kann dem entsprechenden Gründungspfahl eine Längserstreckung und eine Längsachse zugeordnet werden. Dabei kommt es aber für die vorliegende Erfindung wiederum nicht auf eine mathematisch völlig exakte Festlegung oder Ermittlung der entsprechenden Längsachse an.

Bei einer ersten besonders bevorzugten Ausgestaltung der Gründung beträgt die Längserstreckung des Durchführungsschlitzes wenigstens 0,85 m, vorzugsweise wenigstens 2 m, weiter vorzugsweise wenigstens 3,5 m, insbesondere wenigstens 7 m. Auf diese Weise wird ein weiter Verstellbereich für die Durchführung des Seekabels bereitgestellt, so dass problemlos auf eine sehr deutliche Veränderung des Meeresbodens reagiert werden kann. Alternativ oder zusätzlich kann die Längserstreckung des Durchführungsschlitzes wenigstens dem Fünffachen, insbesondere dem Zehnfachen, insbesondere dem Fünfzehnfachen, der Breite des Durchführungsschlitzes entsprechen. Dabei ist konstruktiv insbesondere ein schmaler und langer Durchführungsschlitz bevorzugt, da dieser den Gründungspfahl weniger schwächt aber dennoch einen weiten Verstellbereich ermöglicht. Dabei kann die minimale Breite des Durchführungsschlitzes durch die Dicke des Seekabels festgelegt werden. Bei einem entsprechenden Verhältnis von Breite zu Länge des Durchführungsschlitzes wird dann ein geeigneter Verstellbereich erhalten.

Um unerwünschte Spannungsspitzen bezüglich Beulen, Ermüdung, Fließen, Krüppeln und/oder anderen strukturellen Versagensbildern vorzubeugen, kann der Durchführungsschlitz durch Streifen, Stege, Aufdopplungen, Blechdickenvariationen und/oder mit alternativen Materialien, beispielsweise Stahl und/oder Beton, verstärkt werden. Die alternativen Materialien unterscheiden sich dabei insbesondere von dem Material des Gründungspfahls und/oder des Gründungsschlitzes. Alternativ oder zusätzlich können die Ränder des Durchführungsschlitzes aus diesem Grunde oder um die Verstellung der Seekabeldurchführung zu vereinfachen, wenigstens teilweise, vorzugsweise über wenigstens 10% der Längserstreckung des Durchführungsschlitzes, mit einem Beschichtungsmaterial, insbesondere Kunststoff, etwa Polytetrafluorethylen (PTFE), Graphit, Zink und/oder Aluminium beschichtet sein.

Das Verstellen der Durchführung des Seekabels wird vereinfacht und verbessert, wenn die Seekabeldurchführung entlang des Durchführungsschlitzes wenigstens von der wenigstens einen oberen Stellung in die wenigstens eine untere Stellung und/oder umgekehrt verstellbar vorgesehen ist. Alternativ oder zusätzlich kann die Seekabeldurchführung wenigstens von der wenigstens einen oberen Stellung in die wenigstens eine untere Stellung und/oder umgekehrt wenigstens im Wesentlichen stufenlos verstellbar sein. Auf diese Weise kann besonders flexibel auf eine Veränderung des Meeresbodens reagiert werden. Zudem kann sich die stufenlose Verstellung der Seekabeldurchführung vorteilhaft auf die Verstellbarkeit in Bezug auf den apparativen Aufwand und/oder das Handling der Seekabeldurchführung auswirken.

Unabhängig von der Verstellung der Seekabeldurchführung ist es besonders schonend für das Seekabel, wenn dieses nicht senkrecht zur Längsachse des Gründungspfahls in diesen hinein bzw. aus diesem hinaus geführt wird, sondern stattdessen schräg von unten in den Gründungsfahl durchgeführt wird. Um dieses zu ermöglichen und zu begünstigen, ist es bevorzugt, wenn die Seekabeldurchführung eine ovale Öffnung zum Durchführen des Seekabels aufweist. Diese Öffnung ist dabei weiter vorzugsweise wenigstens im Wesentlichen parallel zum Durchführungsschlitz ausgerichtet. Mithin ist eine durch die ovale Öffnung definierte Ebene wenigstens im Wesentlichen parallel zum Durchführungsschlitz ausgerichtet. Gerade dann kann eine platzsparende Konstruktion erreicht werden und kommen die Vorteile der ovalen Öffnung hinsichtlich der Führung des Seekabels in der Seekabeldurchführung zum Tragen.

Die Öffnung kann zudem wenigstens zwischen wenigstens einer oberen Stellung zum Durchführen des Seekabels durch einen oberen Abschnitt des Durchführungsschlitzes in wenigstens eine untere Stellung zum Durchführen des Seekabels durch einen unteren Abschnitt des Durchführungsschlitzes am Durchführungsschlitz verstellbar angeordnet sein. Dabei kann auch die Öffnung wenigstens in einer Richtung entlang des Durchführungsschlitzes nach oben oder nach unten verstellbar sein. Besonders zweckmäßig ist es jedoch grundsätzlich, wenn die Öffnung in beide Längsrichtungen des Durchführungsschlitzes hin und her verstellt werden kann. Hier bietet es sich alternativ oder zusätzlich an, wenn die untere Stellung und/oder die obere Stellung der Öffnung von der Öffnung dann eingenommen wird, wenn auch die Seekabeldurchführung die entsprechende untere Stellung und/oder die entsprechende obere Stellung einnimmt. Jedenfalls werden durch die Öffnung so in unterschiedlichen Stellungen entlang des Durchführungsschlitzes unterschiedliche Möglichkeiten für die Durchführung des Seekabels in unterschiedlichen Positionen geschaffen. Dabei ist es nicht zwingend, dass die Öffnung oval ausgebildet ist, obwohl dies bevorzugt sein wird. Die Öffnung könnte in diesem Zusammenhang auch kreisrund oder in einer anderen Form ausgebildet sein.

Zur leichten Verstellung der Seekabeldurchführung wenigstens zwischen der wenigstens einen oberen Stellung und der wenigstens einen unteren Stellung sowie zur konstruktiv einfachen Montage der Seekabeldurchführung kann die Seekabeldurchführung einen, insbesondere die Öffnung aufweisenden, Schlitten umfassen. Der Schlitten kann dann die Verstellung der Seekabeldurchführung und insbesondere bedarfsweise die Verstellung der Öffnung entlang des Durchführungsschlitzes übernehmen. Dies geschieht in zweckmäßiger und zugleich einfacher Weise, wenn der Schlitten wenigstens zwischen wenigstens einer oberen Stellung zum Durchführen des Seekabels durch einen oberen Abschnitt des Durchführungsschlitzes in wenigstens eine untere Stellung zum Durchführen des Seekabels durch einen unteren Abschnitt des Durchführungsschlitzes verstellbar angeordnet ist. Dabei kann auch der Schlitten wenigstens in einer Richtung entlang des Durchführungsschlitzes nach unten oder nach oben verstellbar sein oder, was regelmäßig zweckmäßiger sein wird, in beide Längsrichtungen des Durchführungsschlitzes hin und her verstellbar vorgesehen sein. Hier bietet es sich alternativ oder zusätzlich besonders an, wenn die untere Stellung und/oder die obere Stellung des Schlittens von dem Schlitten dann eingenommen wird, wenn auch die Seekabeldurchführung die entsprechende untere Stellung und/oder die entsprechende obere Stellung einnimmt.

Besonders einfach und zweckmäßig ist es in diesem Zusammenhang, wenn der Schlitten am und/oder im Durchführungsschlitz gehalten ist. Auf diese Weise können Synergien hinsichtlich des Durchführungsschlitzes genutzt werden, und zwar hinsichtlich der Durchführung des Seekabels und der Montage des Schlittens. Alternativ oder zusätzlich kann der Schlitten aber auch am und/oder im Durchführungsschlitz geführt sein. Dann wird eine Synergie des Durchführungsschlitzes wenigstens hinsichtlich der Durchführung des Seekabels und der Führung des Schlittens genutzt. Insbesondere für den Fall, dass der Schlitten im und/oder am Durchführungsschlitz gehalten ist, kann es zweckmäßig sein, wie bereits beschrieben worden ist, wenn die Ränder des Durchführungsschlitzes zur Vereinfachung der Verstellung des Schlittens wenigstens teilweise, vorzugsweise über wenigstens 10% der Längserstreckung des Durchführungsschlitzes, mit einem Beschichtungsmaterial, insbesondere Kunststoff, etwa Polytetrafluorethylen (PTFE), Graphit, Zink und/oder Aluminium beschichtet sind.

Um auf eine einfache Weise sicherzustellen, dass der Schlitten und/oder die Öffnung der Seekabeldurchführung wenigstens einen vorgegebenen Mindestabstand, insbesondere in vertikaler Richtung, zum Meeresboden aufweist, kann der Öffnung und/oder dem Schlitten ein Abstandshalter zum Aufsitzen auf dem Meeresgrund wenigstens in einer unteren Stellung der Öffnung und/oder des Schlittens zum Durchführen des Seekabels durch einen unteren Abschnitt des Durchführungsschlitzes zugeordnet sein. Dabei kann es sich der Einfachheit halber anbieten, wenn der Abstandshalter mit, insbesondere zusammen mit, dem Schlitten und/oder der Öffnung entlang des Durchführungsschlitzes verstellbar vorgesehen ist. Dann kann der Schlitten und/oder die Öffnung unabhängig von der Anordnung des Meeresbodens und unabhängig von möglichen vorherigen Verstellungen des Schlittens und/oder der Öffnung nach unten verstellt werden, bis der Abstandshalter auf dem Meeresboden aufsitzt. Zudem kann durch einen Abstandshalter nicht nur ein Mindestabstand der Durchführung zum Meeresboden erreicht, sondern auch sichergestellt werden, dass die Öffnung und/oder der Schlitten immer wenigstens im Wesentlichen auf einer vorbestimmten Höhe über dem Meeresboden angeordnet ist. Die entsprechende Höhe kann dabei durch die Abmessungen des Abstandshalters vorgegeben werden.

Unabhängig davon ist es für eine zweckmäßige und schonende Durchführung des Seekabels in den Gründungspfahl besonders bevorzugt, wenn der Abstandshalter eine effektive Höhe von wenigstens 0,5 m, vorzugsweise wenigstens 1m, weiter vorzugsweise wenigstens 2 m, insbesondere wenigstens 3 m, aufweist. Die effektive Höhe des Abstandshalters kann dabei der Lände des Abstandshalters entsprechen. Zwingend ist dies jedoch nicht. Bei der effektiven Höhe handelt es sich um die Abmessung des Abstandshalters im verbauten Zustand des Abstandshalters um welche der Abstandshalter das Seekabel mindestens oberhalb des Meeresbodens oder oberhalb einer nachträglich aufgebrachten Schüttung anordnet, wenn der Abstandshalter auf dem Meeresboden aufsitzt. Alternativ oder zusätzlich kann die effektive Höhe des Abstandhalters höchstens 15 m, insbesondere höchstens 8 m, betragen.

Zum einfachen und zuverlässigen Einstellen des Abstandshalters kann der Abstandshalter, vorzugsweise zusammen mit der Öffnung und/oder dem Schlitten, entlang des Durchführungsschlitzes verstellbar ausgebildet sein. Dies bietet sich insbesondere an, wenn der Abstandshalter mit der Öffnung und/oder dem Schlitten fest verbunden ist. Dann lassen sich der Abstandshalter und die Öffnung und/oder der Schlitten sehr einfach gemeinsam entlang des Durchführungsschlitzes verstellen.

Damit die Seekabeldurchführung grundsätzlich einfach und in gewünschter Weise eingestellt werden kann, bietet es sich an, die Seekabeldurchführung, die Öffnung und/oder den Schlitten mit einer Verstelleinrichtung zum gezielten Verstellen der Seekabeldurchführung, der Öffnung und/oder des Schlittens zwischen wenigstens zwei Stellungen zum Durchführen des Seekabels auf unterschiedlichen Höhen durch den Durchführungsschlitz zu versehen. Damit die Verstellung aus dem Inneren des Gründungspfahls und/oder von einer besser zugänglichen Stelle, etwa oberhalb des Meeresspiegels, bewirkt werden kann, bietet es sich weiter an, wenn die Verstelleinrichtung über einen Seilzug, ein Kabel und/oder eine Stange verfügt, um die Verstellung zu bewirken. Unabhängig davon kann es zweckmäßig sein, wenn die Verstelleinrichtung motorisch angetrieben wird und bedarfsweise ferngesteuert angetrieben werden kann. Alternativ oder zusätzlich kann die Verstellung auch über ein ferngesteuertes Fahrzeug (ROV - remotely operated vehicle) erfolgen. Unabhängig davon ist es zweckmäßig, wenn die Verstelleinrichtung zum gezielten Verstellen der Seekabeldurchführung, der Öffnung und/oder des Schlittens zwischen wenigstens der oberen Stellung zum Durchführen des Seekabels durch den oberen Abschnitt des Durchführungsschlitzes und der wenigstens einen unteren Stellung zum Durchführen des Seekabels durch den unteren Abschnitt des Durchführungsschlitzes ausgebildet ist. Bevorzugt ist es weiterhin, wenn der verstellbaren Seekabeldurchführung, der verstellbaren Öffnung und/oder dem verstellbaren Schlitten wenigstens eine Öffnung, wenigstens ein Loch, wenigstens ein Haken, wenigstens ein Dübel und/oder wenigstens ein Winkel zugeordnet ist, welches/welcher ein Ergreifen und Verstellen der Seekabeldurchführung ermöglicht. Dabei kann das Entsprechende Mittel bedarfsweise manuell oder von einem ferngesteuerten Fahrzeug (ROV - remotely operated vehicle) ergriffen werden, um die Höhenverstellung der Seekabeldurchführung zu bewirken.

Die beschriebenen Vorteile der Gründung kommen insbesondere dann zum Tragen, wenn ein Seekabelabschnitt vorgesehen ist, der durch die Seekabeldurchführung, die Öffnung und/oder den Schlitten, von außen in den Gründungspfahl oder umgekehrt hindurchgeführt ist. Dies gilt insbesondere dann, wenn der Seekabelabschnitt ein Abschnitt eines Seestromkabels, insbesondere zum Abführen des von der Offshore-Windkraftanlage erzeugten Stroms, ist. Die Vorteile der beschriebenen Gründung kommen nämlich insbesondere dann zum Tragen, wenn es sich um eine Gründung einer Offshore-Windkraftanlage handelt und/oder wenn die Gründung eine Monopile-Gründung ist, also einen einzigen Gründungspfahl aufweist. Es ist jedoch auch vorteilhaft, wenn es sich bei der Gründung um eine Tripod-Gründung, eine Jacket-Gründung oder eine Schwergewichtsgründung handelt. Auch in diesen Fällen wird es bevorzugt aber nicht zwingend sein, wenn das Offshore-Bauwerk eine Offshore-Windkraftanlage ist.

Nachfolgend wird die Erfindung anhand einer lediglich ein Ausführungsbeispiel darstellenden Zeichnung näher erläutert. In der Zeichnung zeigt
- Fig. 1: eine Gründung einer Offshore-Windkraftanlage in einer schematischen Seitenansicht und
- Fig. 2A-B: den unteren Bereich der Gründung mit der Seekabeldurchführung in einer unteren Stellung und in einer oberen Stellung jeweils in einer schematischen Seitenansicht,
- Fig. 3A-B: Details der Gründung im Bereich der Seekabeldurchführung in einer perspektivischen Ansicht und
- Fig. 4: das Detail der Gründung in einer Schnittansicht

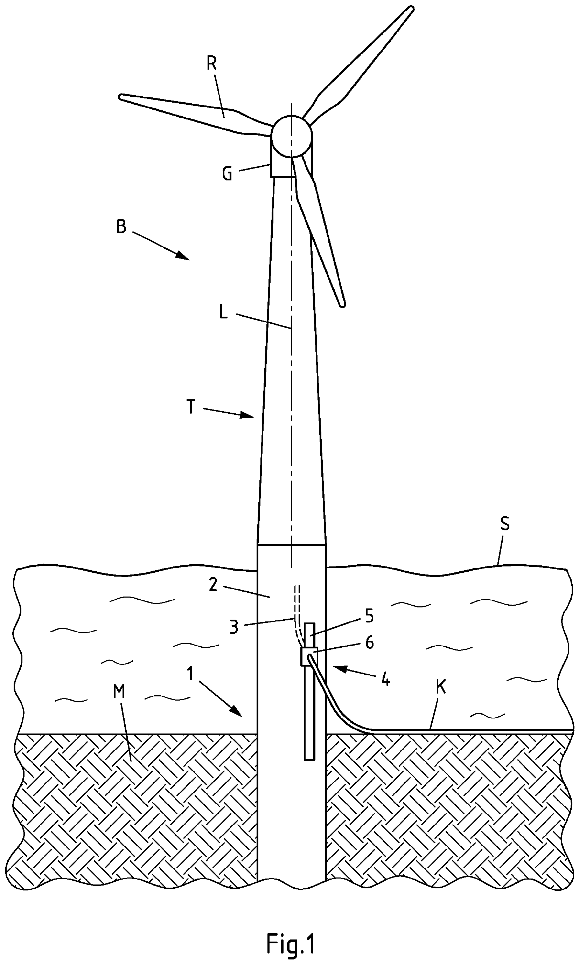

In der Fig. 1 ist eine Gründung 1 eines Offshore-Bauwerks B in Form einer Offshore-Windkraftanlage dargestellt, das eine Monopile-Gründung mit einem einzigen Gründungspfahl 2 aufweist. Der Gründungspfahl 2 ist teilweise in den Meeresboden M eingelassen und trägt einen Turm T samt Gondel G und Rotor R des Offshore-Bauwerks B. Der dargestellte und insoweit bevorzugte Gründungspfahl 2 ist dabei aus einem Stahlrohr gefertigt, das sich bis über den Meeresboden M nach oben erstreckt, aber nicht erstrecken muss. Im Bereich des Meeresbodens M ist ein Seekabel K in Form eines Seestromkabels in den Gründungspfahl 2 hineingeführt. Zur Verbindung unterschiedlicher Offshore-Windkraftanlagen, etwa in einem Offshore-Windpark, kann an anderer Stelle auch ein Seekabel S, insbesondere in Form eines Seestromkabels wieder aus dem Gründungspfahl 2 hinausgeführt sein. Ein Seekabelabschnitt 3 des Seekabels K wird jedenfalls mittels einer Seekabeldurchführung 4 in den Gründungspfahl 2 geführt. Hierzu weist die Seekabeldurchführung 4 einen Durchführungsschlitz 5 auf, durch den der Seekabelabschnitt 3 hindurchgeführt ist. Da die Fügerichtung des Seekabels K und die Richtung, entlang der eine Leitung entlang des Seekabels K erfolgt, für die Gründung 1 grundsätzlich ― wenn überhaupt ― weniger von Bedeutung sind, bedarf es im Regelfall keiner Unterscheidung dahingehend, ob das Seekabel K in den Gründungspfahl 2 hinein oder hinaus geführt ist bzw. in welche Richtung das Seekabel K durch den Durchführungsschlitz 5 hindurch geführt ist.

Das Seekabel K liegt bei der dargestellten und insoweit bevorzugten Gründung 1 angrenzend zum Gründungspfahl 2 auf dem Meeresboden M. Von dort erstreckt sich das Seekabel K schräg nach oben, wo es ebenfalls in schräger Anordnung durch den Durchführungsschlitz 5 geführt ist. Die Durchführung des Seekabels K erfolgt dabei etwa 0,5 m bis 10 m über dem an den Gründungspfahl 2 angrenzenden Meeresboden M, auf dem das Seekabel K aufliegt. Im Bereich der Durchführung des Seekabels K durch den Durchführungsschlitz 5 ist das Seekabel K von der Seekabeldurchführung 4 gehalten.

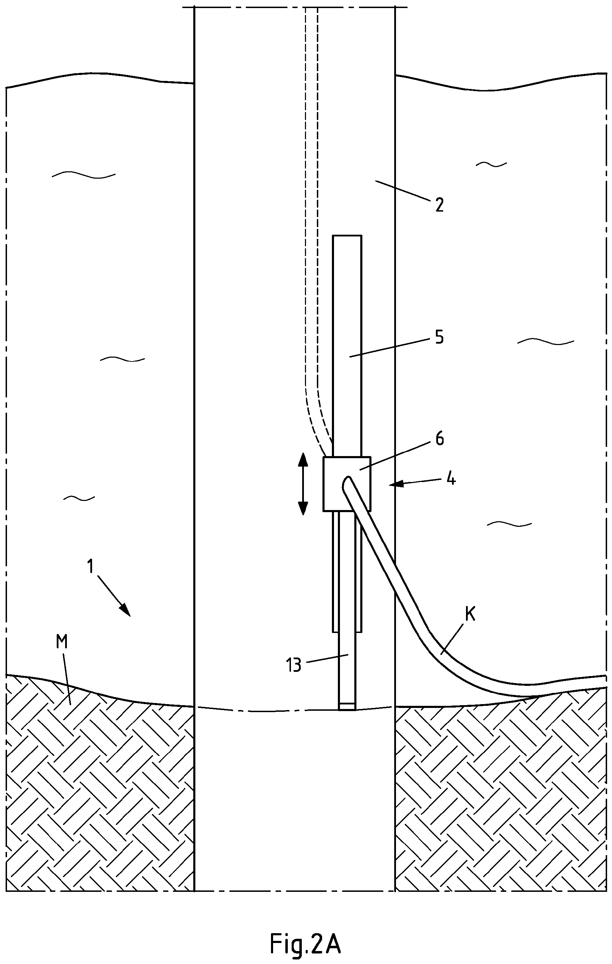

In der Fig. 2A ist die Gründung 1 in einem Detail im Bereich der Seekabeldurchführung 4 dargestellt. Der Durchführungsschlitz 5 erstreckt sich wenigstens im Wesentlichen parallel zur Längsachse L des Gründungspfahls 2. Die Länge des Durchführungsschlitzes 5 beträgt beim dargestellten und insoweit bevorzugten Gründungspfahl 2 mindestens 2,5 m, wobei der Durchführungsschlitz 5 wenigstens zehn Mal länger ist als breit. Zudem ist die Breite des Durchführungsschlitzes 5 etwas breitet als der Durchmesser des Seekabels K, das vorliegend einen runden Querschnitt aufweist, aber nicht aufweisen muss. Zudem ist die Seekabeldurchführung 4 in einer unteren Stellung dargestellt, in der die Seekabeldurchführung 4 das Durchführen des Seekabels K durch einen unteren Abschnitt des Durchführungsschlitzes 5 ermöglicht.

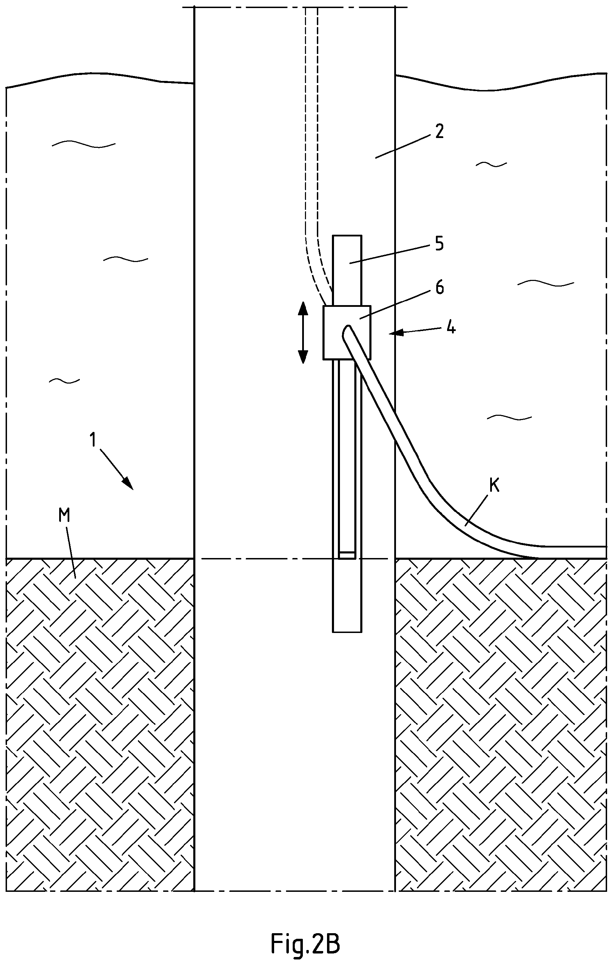

In der Fig. 2B ist die Seekabeldurchführung 4 dagegen in einer oberen Stellung dargestellt, in der die Seekabeldurchführung 4 das Durchführen des Seekabels K durch einen oberen Abschnitt des Durchführungsschlitzes 5 ermöglicht. Dabei kann in beiden Fällen der Abstand der Durchführung des Seekabels K etwa gleich weit vom Meeresboden M beabstandet sein. Je nachdem wie hoch der Meeresboden M angrenzend zum Gründungspfahl 2 ist, kann die Seekabeldurchführung 4 verstellt werden, um das Seekabel K auf einer geeigneten und das Seekabel K schonenden Höhe durch den Durchführungsschlitz 5 zu führen.

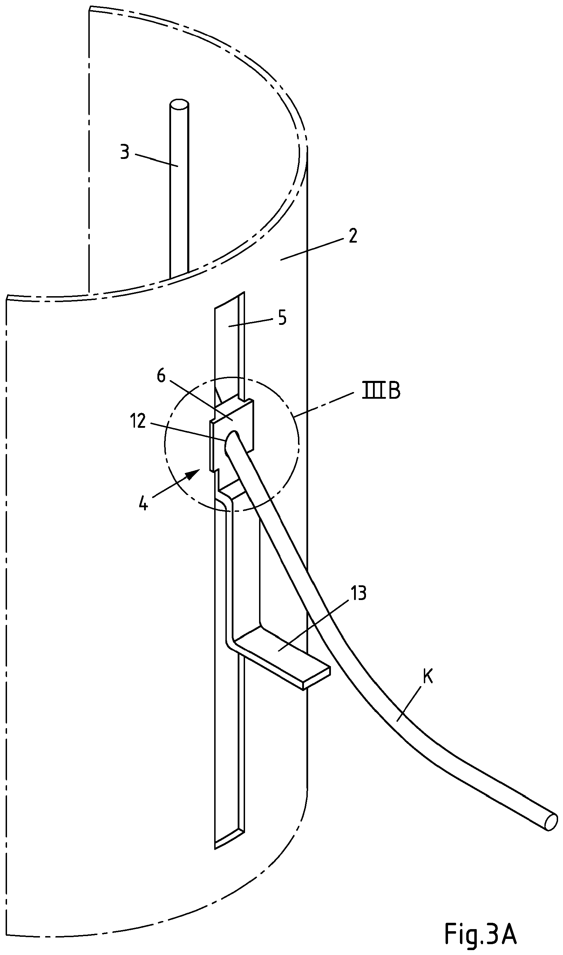

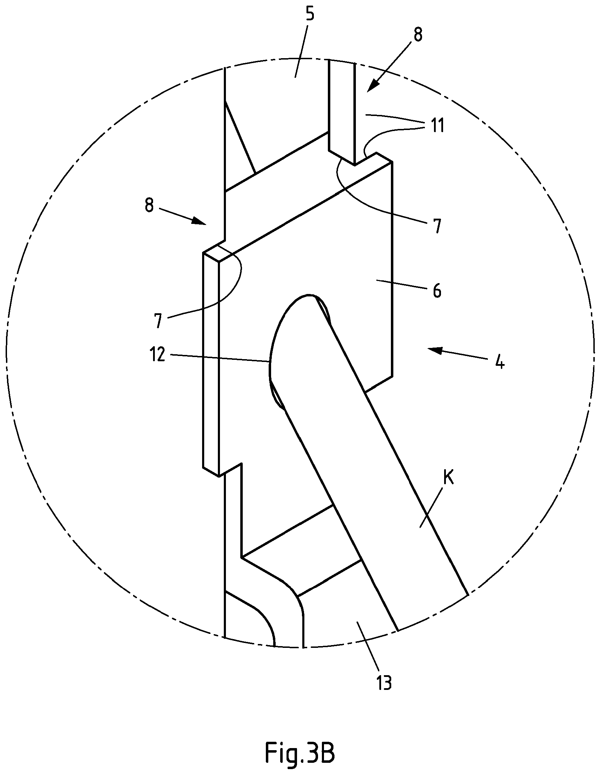

Die Gründung 1 der Fig. 2A-B unterscheidet sich mithin grundsätzlich lediglich in der Stellung der Seekabeldurchführung 4, die im Detail in den Fig. 3A-B dargestellt ist. Die dargestellte und insoweit bevorzugte Seekabeldurchführung 4 weist einen Schlitten 6 auf, der in dem Durchführungsschlitz 5 derart gehalten ist, dass der Schlitten 6 entlang des Durchführungsschlitzes 5 hin und her verschoben werden kann. Der Schlitten 6 weist dazu an gegenüberliegenden Seiten jeweils eine Nut 7 auf. In den Nuten 7 ist jeweils ein Rand 8 des Durchführungsschlitzes 5 aufgenommen. Dadurch kann der Schlitten 6 stufenlos und in den beiden entgegengesetzten Längsrichtungen des Durchführungsschlitzes 5 entlang des Durchführungsschlitzes 5 verstellt werden. Andere Anbindungen des Schlittens 6 an den Durchführungsschlitz 5 sind jedoch denkbar. Zum Verstellen der Seekabeldurchführung 4 entlang des Durchführungsschlitzes 5 ist die dargestellte und insoweit bevorzugte Seekabeldurchführung 4 bzw. der Schlitten 6 mit einer Verstelleinrichtung 9 versehen. Diese Verstelleinrichtung umfasst dabei einen Seilzug 10, der mit dem Schlitten 6 verbunden ist. So kann der Schlitten 6 beispielsweise über einen oberhalb des Meeresspiegels S angeordneten, motorischen Antrieb gezielt in der Höhe entlang des Durchführungsschlitzes 5 verstellt werden. Andere Antriebe sind jedoch ebenfalls denkbar. Zudem kann die Verstellung aber auch auf andere Weise erfolgen, etwa über eine Stange.

Es können zudem die Flanken 11 der Nuten 7 und/oder die Ränder 8 des Durchführungsschlitzes 5 mit einem Gleitmittel, etwa aus Kunststoff versehen sein, um zwar einerseits das Verschieben des Schlittens 6 entlang des Durchführungsschlitzes 5 problemlos zu ermöglichen aber gleichzeitig beim Verschieben des Schlittens 6 entlang des Durchführungsschlitzes 5 eine nicht unerhebliche Gleitreibung zu erzeugen. So kann der Schlitten 6 infolge einer auf das Seekabel K einwirkenden Meeresströmung rauf und/oder runter verschoben werden, um eine Beschädigung zu vermeiden. Allerdings führt die Gleitreibung auch dazu, dass mögliche Schwingungen des Seekabels K gedämpft werden, was ebenfalls zu einer Schonung des Seekabels K beitragen kann.

Der Schlitten 6 stellt zudem eine Öffnung 12 zur Durchführung des Seekabelabschnitts 3 bereit. Die Öffnung 12 ist dabei oval ausgebildet, und zwar mit der Längserstreckung wenigstens im Wesentlichen parallel zur Längserstreckung des Durchführungsschlitzes 5. So kann der Seekabelabschnitt 3 schräg nach oben durch die Öffnung 12 geführt und sogleich in der Öffnung 12 geführt und/oder in der Öffnung 12 gehalten werden. Das Seekabel K ist dabei etwas dünner als der Durchführungsschlitz 5 und die Öffnung 12 jeweils breit ist.

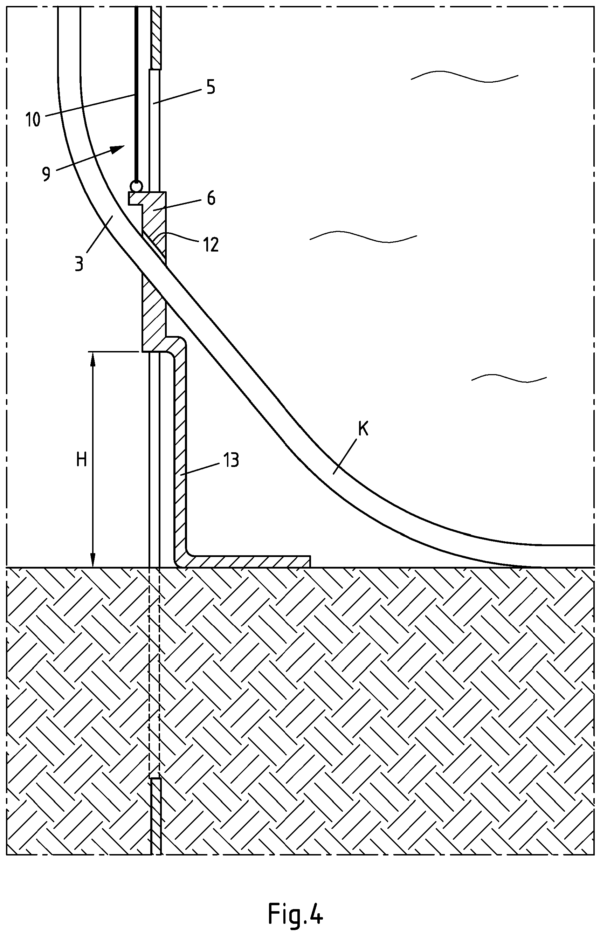

Wie insbesondere der Fig. 4 entnommen werden kann, ist bei der dargestellten und insoweit bevorzugten Seekabeldurchführung 4 der Schlitten 6 mit einem Abstandshalter 13 versehen, der auf dem Meeresgrund M aufsitzt, wenn der Schlitten 6 weit genug entlang des Durchführungsschlitzes 5 nach unten verstellt wird. Der Abstandshalter 13 weist eine Höhe H von etwa 3 m auf, so dass die Öffnung 12 der Seekabeldurchführung 4 zur Durchführung des Seekabelabschnitts 3 wenigstens etwa 3 m oberhalb des Meeresbodens M angeordnet ist, wenn der Abstandshalter 13 auf dem Meeresboden M aufsitzt. Bei der dargestellten und insoweit bevorzugten Seekabeldurchführung 4 ist zudem der Abstandshalter 13 fest mit dem Schlitten 6 verbunden, so dass der Abstandshalter 13 stets zusammen mit dem Schlitten 6 entlang des Durchführungsschlitzes 5 verstellt wird.

### Bezugszeichenliste

- 1: Gründung
- 2: Gründungspfahl
- 3: Seekabelabschnitt
- 4: Seekabeldurchführung
- 5: Durchführungsschlitz
- 6: Schlitten
- 7: Nut
- 8: Rand
- 9: Verstelleinrichtung
- 10: Seilzug
- 11: Flanke
- 12: Öffnung
- 13: Abstandshalter
- B: Offshore-Bauwerk
- G: Gondel
- H: Höhe
- K: Seekabel
- L: Längsachse
- R: Rotor
- S: Meeresspiegel
- T: Turm
- M: Meeresboden

## Patentansprüche

1. Gründung (1) eines Offshore-Bauwerks (B), insbesondere einer Offshore-Windkraftanlage, mit wenigstens einem Gründungspfahl (2), wobei der Gründungspfahl (2) eine Seekabeldurchführung (4) zum Durchführen eines Seekabels (K) aufweist,
**dadurch gekennzeichnet, dass**
die Seekabeldurchführung (4) wenigstens einen im Gründungspfahl (2) vorgesehenen und sich wenigstens überwiegend parallel zur Längsachse des Gründungspfahls (2) erstreckenden Durchführungsschlitz (5) aufweist und dass die Seekabeldurchführung (4) wenigstens zwischen wenigstens einer oberen Stellung zum Durchführen des Seekabels (K) durch einen oberen Abschnitt des Durchführungsschlitzes (5) in wenigstens eine untere Stellung zum Durchführen des Seekabels (K) durch einen unteren Abschnitt des Durchführungsschlitzes (5) verstellbar vorgesehen ist.

2. Gründung nach Anspruch 1,
**dadurch gekennzeichnet, dass**
die Längserstreckung des Durchführungsschlitzes (5) wenigstens 0,85 m, vorzugsweise wenigstens 2 m, weiter vorzugsweise wenigstens 3,5 m, insbesondere wenigstens 7 m, beträgt und/oder dass die Längserstreckung des Durchführungsschlitzes (5) wenigstens dem Fünffachen, insbesondere dem Zehnfachen, insbesondere dem Fünfzehnfachen, der Breite des Durchführungsschlitzes (5) entspricht.

3. Gründung nach Anspruch 1 oder 2,
**dadurch gekennzeichnet, dass**
der Durchführungsschlitz (5) durch Streifen, Stege, Aufdopplungen, Blechdickenvariationen und/oder mit alternativen Materialien, beispielsweise Stahl und/oder Beton, verstärkt ist und/oder dass die Ränder des Durchführungsschlitzes (5) wenigstens teilweise, vorzugsweise über wenigstens 10% der Längserstreckung des Durchführungsschlitzes (5), mit einem Beschichtungsmaterial, insbesondere Kunststoff, etwa Polytetrafluorethylen (PTFE), Graphit, Zink und/oder Aluminium beschichtet sind.

4. Gründung nach Anspruch 1 oder 2,
**dadurch gekennzeichnet, dass**
die Seekabeldurchführung (4) entlang des Durchführungsschlitzes (5) wenigstens von der wenigstens einen oberen Stellung in die wenigstens eine untere Stellung und/oder umgekehrt verstellbar vorgesehen ist und/oder dass die Seekabeldurchführung (4) wenigstens von der wenigstens einen oberen Stellung in die wenigstens eine untere Stellung und/oder umgekehrt wenigstens im Wesentlichen stufenlos verstellbar ist.

5. Gründung nach einem der Ansprüche 1 bis 3,
**dadurch gekennzeichnet, dass**
die Seekabeldurchführung (4) eine ovale, insbesondere wenigstens im Wesentlichen parallel zum Durchführungsschlitz (5) ausgerichtete, Öffnung zum Durchführen des Seekabels (K) aufweist.

6. Gründung nach Anspruch 4,
**dadurch gekennzeichnet, dass**
die Öffnung (12) wenigstens zwischen wenigstens einer oberen Stellung zum Durchführen des Seekabels (K) durch einen oberen Abschnitt des Durchführungsschlitzes (5) in wenigstens eine untere Stellung zum Durchführen des Seekabels (K) durch einen unteren Abschnitt des Durchführungsschlitzes (5) am Durchführungsschlitz (5) verstellbar angeordnet ist.

7. Gründung nach einem der Ansprüche 1 bis 4,
**dadurch gekennzeichnet, dass**
die Seekabeldurchführung (4) einen, insbesondere die Öffnung (12) aufweisenden, Schlitten (6) umfasst und dass der Schlitten (6) wenigstens zwischen wenigstens einer oberen Stellung zum Durchführen des Seekabels (K) durch einen oberen Abschnitt des Durchführungsschlitzes (5) in wenigstens eine untere Stellung zum Durchführen des Seekabels (K) durch einen unteren Abschnitt des Durchführungsschlitzes (5) verstellbar angeordnet ist.

8. Gründung nach einem der Ansprüche 4 bis 6,
**dadurch gekennzeichnet, dass**
der Schlitten (6) am und/oder im Durchführungsschlitz (5) gehalten und/oder geführt ist.

9. Gründung nach einem der Ansprüche 4 bis 7,
**dadurch gekennzeichnet, dass**
der Öffnung (12) und/oder der Schlitten (6) ein Abstandshalter (13) zum Aufsitzen auf dem Meeresgrund (M) wenigstens in einer unteren Stellung der Öffnung (12) und/oder des Schlittens (6) zum Durchführen des Seekabels (K) durch einen unteren Abschnitt des Durchführungsschlitzes (5) zugeordnet ist.

10. Gründung nach Anspruch 9,
**dadurch gekennzeichnet, dass**
der Abstandshalter (13) eine effektive Höhe von wenigstens 0,5 m, vorzugsweise wenigstens 1 m, weiter vorzugsweise wenigstens 2 m, insbesondere wenigstens 3 m, aufweist und/oder dass der Abstandshalter (13) eine effektive Höhe von höchstens 15 m, vorzugsweise höchstens 8 m, aufweist.

11. Gründung nach Anspruch 9 oder 10,
**dadurch gekennzeichnet, dass**
der Abstandshalter (13), vorzugsweise mit der Öffnung (12) und/oder dem Schlitten (6), entlang des Durchführungsschlitzes (5) verstellbar ist und dass, vorzugsweise, der Abstandshalter (13) mit der Öffnung (12) und/oder dem Schlitten (13) fest verbunden ist.

12. Gründung nach einem der Ansprüche 1 bis 10,
**dadurch gekennzeichnet, dass**
die Seekabeldurchführung (4), die Öffnung (12) und/oder der Schlitten (6) mit einer Verstelleinrichtung (9) zum gezielten Verstellen der Seekabeldurchführung (4), der Öffnung (12) und/oder des Schlittens (6) zwischen wenigstens zwei Stellungen zum Durchführen des Seekabels (K) auf unterschiedlichen Höhen durch den Durchführungsschlitz (5), insbesondere zwischen wenigstens der oberen Stellung zum Durchführen des Seekabels (K) durch den oberen Abschnitt des Durchführungsschlitzes (5) und der wenigstens einen unteren Stellung zum Durchführen des Seekabels (K) durch den unteren Abschnitt des Durchführungsschlitzes (5), versehen ist.

13. Gründung nach einem der Ansprüche 1 bis 11,
**dadurch gekennzeichnet, dass**
ein Seekabelabschnitt (3) vorgesehen ist und dass der Seekabelabschnitt (3) durch die Seekabeldurchführung (4), die Öffnung (12) und/oder den Schlitten (6), von außen in den Gründungspfahl (2) oder umgekehrt hindurchgeführt ist.

14. Gründung nach Anspruch 12,
**dadurch gekennzeichnet, dass**
der Seekabelabschnitt (3) ein Abschnitt eines Seestromkabels, insbesondere zum Abführen des von der Offshore-Windkraftanlage erzeugten Stroms, ist.

15. Gründung nach einem der Ansprüche 1 bis 13,
**dadurch gekennzeichnet, dass**
die Gründung (1) eine Monopile-Gründung, eine Tripod-Gründung, eine Jacket-Gründung oder eine Schwergewichtsgründung ist.

## Claims

1. Foundation structure (1) of an offshore structure (B), in particular of an offshore wind turbine, having at least one foundation pile (2), wherein the foundation pile (2) has a sea cable feedthrough (4) for feeding through a sea cable (K), **characterised in that** the sea cable feedthrough (4) has at least one feedthrough slot (5) provided in the foundation pile (2) and extending at least predominantly parallel to the longitudinal axis of the foundation pile (2) and **in that** the sea cable feedthrough (4) is provided so as to be adjustable at least between at least one upper position for feeding the sea cable (K) through an upper section of the feedthrough slot (5) into at least one lower position for feeding the sea cable (K) through a lower section of the feedthrough slot (5).

2. Foundation structure according to claim 1, **characterised in that** the longitudinal extension of the feedthrough slot (5) is at least 0.85 m, preferably at least 2 m, further preferably at least 3.5 m, in particular at least 7 m and/or **in that** the longitudinal extension of the feedthrough slot (5) corresponds at least to five times, in particular to ten times, in particular to fifteen times, the width of the feedthrough slot (5).

3. Foundation structure according to claim 1 or 2, **characterised in that** the feedthrough slot (5) is reinforced by strips, webs, doubling, sheet thickness variations and/or with alternative materials, for example steel and/or concrete and/or **in that** the edges of the feedthrough slot (5) are coated at least partially, preferably over at least 10% of the longitudinal extension of the feedthrough slot (5), with a coating material, in particular plastic, such as polytetrafluorethylene (PTFE), graphite, zinc and/or aluminium.

4. Foundation structure according to claim 1 or 2, **characterised in that** the sea cable feedthrough (4) is provided so as to be adjustable along the feedthrough slot (5) at least from the at least one upper position into the at least one lower position and/or vice versa and/or **in that** the sea cable feedthrough (4) is at least substantially continuously adjustable at least from the at least one upper position into the at least one lower position and/or vice versa.

5. Foundation structure according to any one of claims 1 to 3, **characterised in that** the sea cable feedthrough (4) has an oval opening, in particular aligned at least substantially parallel to the feedthrough slot (5), to feed through the sea cable (K).

6. Foundation structure according to claim 4, **characterised in that** the opening (12) is arranged so as to be adjustable at the feedthrough slot (5) at least between at least one upper position for feeding the sea cable (K) through an upper section of the feedthrough slot (5) into at least one lower position for feeding the sea cable (K) through a lower section of the feedthrough slot (5).

7. Foundation structure according to any one of claims 1 to 4, **characterised in that** the sea cable feedthrough (4) comprises a carriage (6), in particular comprising the opening (12), and **in that** the carriage (6) is arranged so as to be adjustable at least between at least one upper position for feeding the sea cable (K) through an upper section of the feedthrough slot (5) into at least one lower position for feeding the sea cable (K) through a lower section of the feedthrough slot (5).

8. Foundation structure according to any one of claims 4 to 6, **characterised in that** the carriage (6) is held and/or guided on and/or in the feedthrough slot (5).

9. Foundation structure according to any one of claims 4 to 7, **characterised in that** a spacer (13) is assigned to the opening (12) and/or the carriage (6) for sitting on the seafloor (M) at least in a lower position of the opening (12) and/or of the carriage (6) for feeding the sea cable (K) through a lower section of the feedthrough slot (5).

10. Foundation structure according to claim 9, **characterised in that** the spacer (13) has an effective height of at least 0.5 m, preferably at least 1 m, further preferably at least 2 m, in particular at least 3 m and/or **in that** the spacer (13) has an effective height of at most 15 m, preferably at most 8 m.

11. Foundation structure according to claim 9 or 10, **characterised in that** the spacer (13) is adjustable, preferably with the opening (12) and/or with the carriage (6), along the feedthrough slot (5) and **in that** preferably the spacer (13) is fixedly connected to the opening (12) and/or to the carriage (13).

12. Foundation structure according to any one of claims 1 to 10, **characterised in that** the sea cable feedthrough (4), the opening (12) and/or the carriage (6) is provided with an adjusting apparatus (9) for targetedly adjusting the sea cable feedthrough (4), the opening (12) and/or the carriage (6) between at least two positions for feeding the sea cable (K) at different heights through the feedthrough slot (5), in particular between at least the upper position for feeding the sea cable (K) through the upper section of the feedthrough slot (5) and the at least one lower position for feeding the sea cable (K) through the lower section of the feedthrough slot (5).

13. Foundation structure according to any one of claims 1 to 11, **characterised in that** a sea cable section (3) is provided and **in that** the sea cable section (3) is guided through the sea cable feedthrough (4), the opening (12) and/or the carriage (6), from outside into the foundation pile (2) or vice versa.

14. Foundation structure according to claim 12, **characterised in that** the sea cable section (3) is a section of a sea power cable, in particular for discharging the power generated by the offshore wind turbine.

15. Foundation structure according to any one of claims 1 to 13, **characterised in that** the foundation structure (1) is a monopile foundation structure, a tripod foundation structure, a jacket foundation structure or a gravity foundation structure.

## Revendications

1. Fondation (1) d'une structure offshore (B), notamment d'une éolienne offshore, avec au moins un pieu de fondation (2), le pieu de fondation (2) présentant un passage pour le câble sous-marin (4) pour acheminer un câble sous-marin (K),
**caractérisée en ce que**
le passage pour câble sous-marin (4) présente au moins une fente de passage (5), étant prévue dans le pieu de fondation (2), et s'étendant au moins principalement parallèlement par rapport à l'axe longitudinal du pieu de fondation (2), et **en ce que** l'on prévoit le passage pour câble sous-marin (4) de manière réglable, au moins entre au moins une position supérieure pour acheminer le câble sous-marin (K) à travers une section supérieure de la fente de passage (5) dans au moins une position inférieure pour acheminer le câble sous-marin (K) à travers une section inférieure de la fente de passage (5).

2. Fondation selon la revendication 1,
**caractérisée en ce que**
l'extension longitudinale de la fente de passage (5) est au moins de 0,85 m, de préférence au moins de 2 m, et tout particulièrement au moins de 3,5 m, notamment d'au moins de 7 m, et/ou **en ce que** l'extension longitudinale de la fente de passage (5) correspond au moins à cinq fois, notamment dix fois, notamment quinze fois la largeur de la fente de passage (5).

3. Fondation selon la revendication 1 ou 2,
**caractérisée en ce que**
la fente de passage (5) est renforcée par des bandes, des traverses, des doublages, des variations d'épaisseur de tôle et/ou par des matériaux alternatifs, par exemple de l'acier et/ou du béton et/ou **en ce que** les bords de la fente de passage (5) sont revêtus, au moins partiellement, de préférence sur au moins 10 pourcent de l'extension longitudinale de la fente de passage (5), d'un matériau de revêtement, notamment du plastique, par exemple du polytétrafluoréthylène (PTFE), du graphite, du zinc et/ou de l'aluminium.

4. Fondation selon la revendication 1 ou 2,
**caractérisée en ce que**
l'on prévoit le passage pour câble sous-marin (4) le long de la fente de passage (5) de manière réglable, au moins à partir au moins d'une position supérieure dans au moins une position inférieure et/ou vice versa et/ou **en ce que** le passage pour câble sous-marin (4) est réglable, au moins sensiblement en continu, au moins à partir au moins d'une position supérieure dans au moins une position inférieure et/ou vice versa.

5. Fondation selon l'une des revendications 1 à 3,
**caractérisée en ce que**
le passage pour câble sous-marin (4) présente une ouverture ovale, orientée notamment au moins sensiblement parallèlement par rapport à la fente de passage (5), pour acheminer le câble sous-marin (K).

6. Fondation selon la revendication 4,
**caractérisée en ce que**
l'ouverture (12) est agencée réglable sur la fente de passage (5), au moins entre au moins une position supérieure pour acheminer le câble sous-marin (K) à travers une section supérieure de la fente de passage (5) dans au moins une position inférieure pour acheminer le câble sous-marin (K) à travers une section inférieure de la fente de passage (5).

7. Fondation selon l'une des revendications 1 à 4,
**caractérisée en ce que**
le passage pour câble sous-marin (4) comporte une glissière (6), présentant notamment l'ouverture (12), et **en ce que** la glissière (6) est agencée réglable au moins entre au moins une position supérieure pour acheminer le câble sous-marin (K) à travers une section supérieure de la fente de passage (5) dans au moins une position inférieure pour acheminer le câble sous-marin (K) à travers une section inférieure de la fente de passage (5).

8. Fondation selon l'une des revendications 4 à 6,
**caractérisée en ce que**
la glissière (6) est maintenue et/ou guidée sur et/ou dans la fente de passage (5).

9. Fondation selon l'une des revendications 4 à 7,
**caractérisée en ce que**
un écarteur (13) est associé à l'ouverture (12) et/ou à la glissière (6) pour s'asseoir sur le fond marin (M), au moins dans une position inférieure de l'ouverture (12) et/ou de la glissière (6), pour acheminer le câble sous-marin (K) à travers une section inférieure de la fente de passage (5).

10. Fondation selon la revendication 9,
**caractérisée en ce que**
l'écarteur (13) présente une hauteur effective au moins de 0,5 m, de préférence au moins de 1 m, tout particulièrement au moins de 2 m, notamment au moins de 3 m, et/ou **en ce que** l'écarteur (13) présente une hauteur effective tout au plus de 15 m, de préférence tout au plus de 8 m.

11. Fondation selon la revendication 9 ou 10,
**caractérisée en ce que**
l'écarteur (13), de préférence avec l'ouverture (12) et/ou la glissière (6), est réglable le long de la fente de passage (5) et **en ce que**, de préférence, l'écarteur (13) est fermement relié avec l'ouverture (12) et/ou la glissière (13).

12. Fondation selon l'une des revendications 1 à 10,
**caractérisée en ce que**
le passage pour câble sous-marin (4), l'ouverture (12) et/ou la glissière (6) sont munis d'un dispositif de réglage (9) pour régler, de manière ciblée, le passage pour câble sous-marin (4), l'ouverture (12) et/ou la glissière (6) entre au moins deux positions pour acheminer le câble sous-marin (K) à des hauteurs différentes à travers la fente de passage (5), notamment entre au moins la position supérieure pour acheminer le câble sous-marin (K) à travers la section supérieure de la fente de passage (5) et au moins la position inférieure pour acheminer le câble sous-marin (K) à travers la section inférieure de la fente de passage (5).

13. Fondation selon l'une des revendications 1 à 11,
**caractérisée en ce que**
l'on prévoit une section de câble sous-marin (3) et **en ce que** la section de câble sous-marin (3) est acheminée, à travers le passage pour câble sous-marin (4), l'ouverture (12) et/ou la glissière (6), depuis l'extérieur, dans le pieu de fondation (2) ou vice versa.

14. Fondation selon la revendication 12,
**caractérisée en ce que**
la section de câble sous-marin (3) est une section d'un câble électrique sous-marin, notamment pour transporter l'électricité produite par les éoliennes offshore.

15. Fondation selon l'une des revendications 1 à 13,
**caractérisée en ce que**
la fondation (1) est une fondation monopile, une fondation tripode, une fondation de type veste ou une fondation de gravité.
